# EUROPÄISCHE PATENTSCHRIFT

(11) **EP 4 126 638 B1**
(45) Veröffentlichungstag und Bekanntmachung des Hinweises auf die Patenterteilung: **17.12.2025**
(21) Anmeldenummer: 21716644.6
(22) Anmeldetag: 29.03.2021
(51) Int. Cl.: B62D 5/04, F16H 57/039

(54) **HILFSKRAFTANTRIEB FÜR EINE LENKSÄULE EINES KRAFTFAHRZEUGS UND LENKSÄULE FÜR EIN KRAFTFAHRZEUG**
POWER STEERING DRIVE FOR A STEERING COLUMN OF A MOTOR VEHICLE, AND STEERING COLUMN FOR A MOTOR VEHICLE
ENTRAÎNEMENT DE DIRECTION ASSISTÉE ÉLECTRIQUE POUR UNE COLONNE DE DIRECTION D'UN VÉHICULE AUTOMOBILE, ET COLONNE DE DIRECTION POUR UN VÉHICULE AUTOMOBILE

(30) Priorität: 31.03.2020 DE 102020204154
(43) Veröffentlichungstag der Anmeldung: 08.02.2023
(73) Patentinhaber: thyssenkrupp Presta AG, 9492 Eschen (LI); thyssenkrupp AG, 45143 Essen (DE)
(72) Erfinder: MÖLLER, Dirk, 9466 Sennwald (CH)
(74) Vertreter: thyssenkrupp Intellectual Property GmbH
(86) Internationale Anmeldenummer: PCT/EP2021/058064
(87) Internationale Veröffentlichungsnummer: WO 2021/198125

(56) Entgegenhaltungen:
- WO-A1-2015/169844
- DE-A1- 102012 102 665
- DE-A1- 102014 110 108
- DE-A1- 102017 217 605
- DE-A1- 102017 218 897
- DE-U1- 202017 100 155
- KR-A- 20120 057 036

## Beschreibung

### Stand der Technik

Die Erfindung betrifft einen Hilfskraftantrieb für eine Lenksäule eines Kraftfahrzeugs, umfassend eine in einem Getriebegehäuse gelagerte, motorisch drehend antreibbare Schneckenwelle, die mit einem mit einer Lenkwelle koppelbaren Schneckenrad in Verzahnungseingriff steht, und mit einer an dem Getriebegehäuse abgestützten Nachstellvorrichtung, welche die Schneckenwelle in Richtung des Verzahnungseingriffs gegen das Schneckenrad belastet, wobei die Nachstellvorrichtung ein scherverdickendes Fluid und eine Vorspanneinrichtung aufweist, durch die das Fluid mit einem vorgegebenen Vorspanndruck beaufschlagbar ist, wobei das Fluid in einer form- und/oder volumenveränderbaren Aktuatorkammer aufgenommen ist. Die Erfindung betrifft weiterhin eine elektromechanische Hilfskraftlenkung für ein Kraftfahrzeug mit einem derartigen Hilfskraftantrieb.

Bei hilfskraftunterstützten Lenkungen von Kraftfahrzeugen wird zusätzlich zum manuellen Lenkmoment, welches vom Fahrer als Lenkbefehl über das eingangsseitig angebrachte Lenkrad in die Lenkwelle eingebracht wird, ein zusätzliches Hilfsmoment in den Lenkstrang eingekoppelt, um das manuelle Lenkmoment für einen Lenkeinschlag der Räder zu unterstützen.

In einer elektromechanischen Hilfskraftlenkung wird das manuelle Lenkmoment mittels eines Drehmomentsensors erfasst, beispielsweise durch Messung der relativen Torsion eines zwischen einer Eingangs- und einer Ausgangswelle der Lenkwelle eingegliederten Drehstabs. Abhängig von dem gemessenen Lenkmoment wird in einer elektrischen Steuereinheit die erforderliche Hilfskraftunterstützung bestimmt, und ein elektrischer Hilfskraftantrieb entsprechend angesteuert. Der Hilfskraftantrieb weist einen Elektromotor zur Erzeugung eines Hilfsmoments auf, welches über ein Schneckengetriebe in die Lenkwelle eingekoppelt wird, wie im Stand der Technik beispielsweise in der DE 10 2017 218 897 A1 beschrieben. Das Schneckengetriebe weist eine von dem Elektromotor drehend antreibbare Schneckenwelle auf, die in Verzahnungseingriff mit einem Schneckenrad steht, welches drehfest mit der Ausgangswelle der Lenkwelle verbunden ist.

Um die Laufruhe zur erhöhen, und Geräuschbildung bei den durch die Lenkbewegungen verursachten Lastwechseln möglichst zu vermeiden, ist es bekannt, die Schneckenwelle mittels einer an dem Getriebegehäuse abgestützten Nachstellvorrichtung im Verzahnungseingriff zu halten und bevorzugt mit einer vorgegebenen, in Richtung des Verzahnungseingriffs ausgeübten Nachstellkraft gegen das Schneckenrad zu belasten. Die aus der genannten DE 10 2017 218 897 A1 bekannte Nachstellvorrichtung sieht vor, dass durch ein an dem Getriebegehäuse abgestütztes Federelement ein die Schneckenwelle lagernder, relativ zum Getriebegehäuse beweglicher Lagerträger gegen das Schneckenrad elastisch verspannt wird. Zur Reduzierung von Vibrationen und Anschlaggeräuschen ist zwischen der Schneckenwelle und dem Getriebegehäuse ein Dämpfer angeordnet. Dieser umfasst ein Elastomer, welches gefederte Ausgleichsbewegungen der Schneckenwelle durch Reibung mechanisch dämpft.

Bedingt durch das Funktionsprinzip muss der Verzahnungseingriff bei dem bekannten Schneckengetriebe Spiel aufweisen, um zum einen die Bereitstellung der elastischen Vorspann- bzw. Nachstellkraft zu ermöglichen, und zum anderen eine Dämpfungswirkung bereitstellen zu können, welche bei den bekannten Dämpfern auf der Umwandlung von Bewegungsenergie beruht. Daraus resultiert der Zielkonflikt, eine Relativbewegung der Schneckenwelle zulassen zu müssen, wodurch eine unerwünschte Geräuschentwicklung auftreten kann, die jedoch für eine effektive Dämpfung erforderlich ist.

Ein Hilfskraftantrieb der eingangs genannten Art ist aus der DE 10 2014 110108 A1 bekannt.

Angesichts der vorangehend erläuterten Problematik ist es eine Aufgabe der vorliegenden Erfindung, bei einem Hilfskraftgetriebe eine verbesserte Laufruhe zu ermöglichen.

### Darstellung der Erfindung

Diese Aufgabe wird erfindungsgemäß gelöst durch einen Hilfskraftantrieb mit den Merkmalen des Anspruchs 1, und durch eine Hilfskraftlenkung mit den Merkmalen des Anspruchs 13. Vorteilhafte Weiterbildungen ergeben sich aus den Unteransprüchen.

Bei einem Hilfskraftantrieb für eine Lenksäule eines Kraftfahrzeugs, umfassend eine in einem Getriebegehäuse gelagerte, motorisch drehend antreibbare Schneckenwelle, die mit einem mit einer Lenkwelle koppelbaren Schneckenrad in Verzahnungseingriff steht, und mit einer an dem Getriebegehäuse abgestützten Nachstellvorrichtung, welche die Schneckenwelle in Richtung des Verzahnungseingriffs gegen das Schneckenrad belastet, wobei die Nachstellvorrichtung ein scherverdickendes Fluid und eine Vorspanneinrichtung aufweist, durch die das Fluid mit einem vorgegebenen Vorspanndruck beaufschlagbar ist, wobei das Fluid in einer form- und/oder volumenveränderbaren Aktuatorkammer aufgenommen ist, ist erfindungsgemäß vorgesehen, dass die Vorspanneinrichtung eine mit der Aktuatorkammer verbundene Druckkammer aufweist, mit der eine Druckerzeugungsvorrichtung zusammenwirkt.

Erfindungsgemäß ist vorgesehen, dass die Vorspanneinrichtung eine mit der Aktuatorkammer verbundene Druckkammer aufweist, mit der eine Druckerzeugungsvorrichtung zusammenwirkt. Die Druckkammer ist zumindest teilweise mit dem Fluid gefüllt, und kann hydraulisch mit der Aktuatorkammer gekoppelt oder mit der Aktuatorkammer integriert ausgebildet sein. Durch die Druckerzeugungsvorrichtung kann ein vorgegebener Flüssigkeitsdruck des Fluids in der Druckkammer und der Aktuatorkammer erzeugt werden. Dies kann durch eine an die Druckkammer angekoppelte Krafterzeugungseinrichtung erreicht werden, durch die eine Betätigungskraft über eine Kraftübertragungseinrichtung, beispielsweise eine Kolben-Zylinder-Einheit oder eine flexible Membran, in einen Flüssigkeitsdruck des Fluids umgesetzt werden kann. Eine derartige Druckerzeugungsvorrichtung kann kompakt und mit geringem Aufwand realisiert werden.

Das Fluid ist in einer form- und/oder volumenveränderbaren Aktuatorkammer aufgenommen. Die Aktuatorkammer kann beispielsweise in einem Nachstellaktuator angeordnet oder ausgebildet sein, und einen Fluidraum begrenzen, in dem das scherverfestigende Fluid eingeschlossen ist. Um die von der Schneckenwelle relativ zum Getriebegehäuse ausgeübte Kraft, die bevorzugt quer zur Schneckenachse gerichtet ist, als Scherbelastung in das eingeschlossenen Fluid einleiten zu können, kann sie beispielsweise durch einen flexiblen und/oder bewegbaren Wandabschnitt form- und/oder volumenveränderbar ausgestaltet sein. Beispielsweise kann die Aktuatorkammer im Zylinder einer hydraulischen Kolben-Zylinder-Einheit ausgebildet sein, die derart zwischen dem Getriebegehäuse und der Schneckenwelle angeordnet ist, dass eine in Richtung des Verzahnungseingriffs wirkende Kraft über den Kolben als Scherbelastung in das in der Aktuatorkammer eingeschlossene Fluid übertragen wird. Alternativ kann eine Aktuatorkammer eine flexible Membran oder einen Balg aufweisen, über die das eingeschlossene Fluid von der Schneckenwelle oder vom Getriebegehäuse mit einer Scherbelastung beaufschlagt werden kann. Die Aktuatorkammer kann auch in einem flexiblen, mit Fluid gefüllten Kissen oder einer verformbaren Blase ausgebildet sein. Eine derartige Ausführung kann mit geringem Aufwand, robust und betriebssicher realisiert werden.

Die Nachstellvorrichtung weist eine Vorspanneinrichtung auf, durch die das Fluid mit einem vorgegebenen Vorspanndruck beaufschlagbar ist. Durch die Vorspanneinrichtung kann eine in Richtung des Verzahnungseingriffs wirkende Vorspannkraft erzeugt werden, mit der die Schneckenwelle quer zu ihrer Achse gegen das Schneckenrad belastet wird. Die Vorspannkraft kann hydraulisch durch einen vorgegebenen Flüssigkeitsdruck des Fluids erzeugt und eingestellt werden. Eine Erhöhung des Flüssigkeitsdrucks kann mittels einer Druckerzeugungsvorrichtung erfolgen, die beispielsweise eine mit einer externen Betätigungskraft beaufschlagbare Kolben-Zylinder-Einheit oder eine den Fluidraum begrenzende flexible Membran oder Blase aufweist. Der Flüssigkeitsdruck kann dadurch definiert in einer mit dem Fluid gefüllte Aktuatorkammer aufgebaut werden. Die Aktuatorkammer kann über eine hydraulische Kraftübertragungseinrichtung, die beispielsweise, wie vorangehend für die volumen- und/oder formveränderliche Aktuatorkammer beschrieben, eine Kolben-Zylinder-Einheit, eine flexible Membran oder dergleichen den Flüssigkeitsdruck aufweisen kann, den hydraulischen Flüssigkeitsdruck in eine zwischen dem Getriebegehäuse und der Schneckenwelle wirkende Vorspannkraft umsetzen. Bevorzugt kann die Aktuatorkammer in einem Nachstellaktuator ausgebildet sein, der wirkungsmäßig zwischen dem Getriebegehäuse und der Schneckenwelle angeordnet und über eine in Richtung des Verzahnungseingriffs wirksamen hydraulische Kraftübertragungseinrichtung an die Schneckenwelle angekoppelt ist. Ein Vorteil dieser hydraulischen Vorspanneinrichtung ist, dass durch die scherverfestigende Eigenschaft des Fluids der Verzahnungseingriff optimiert eingehalten und gestützt werden kann, wodurch die Laufruhe erhöht werden kann. Es ist eine Integration in die Nachstellvorrichtung möglich, und durch das in der Aktuatorkammer hermetisch eingeschlossene Fluid ist die Anordnung praktisch wartungsfrei.

In der erfindungsgemäßen Anordnung bewirkt die Nachstellvorrichtung die Positionierung und Abstützung der Schneckenwelle im Verzahnungseingriff mit dem Schneckenrad. Dies wird dadurch bewerkstelligt, dass die Nachstellvorrichtung wirkungsmäßig zwischen der Schneckenwelle bzw. einer diese drehbar lagernde Lageranordnung und dem Getriebegehäuse angeordnet ist.

Die Nachstellvorrichtung weist ein scherverdickendes Fluid auf, welches gleichbedeutend als scherverfestigendes Fluid oder als nichtnewtonsche oder dilatante Flüssigkeit bezeichnet wird. Bei einem derartigen Fluid nimmt mit steigender Schergeschwindigkeit die Viskosität zu, d.h. bei einer Scherbeanspruchung wird das Fluid dickflüssiger oder verfestigt sich. Diese Eigenschaft wird erfindungsgemäß ausgenutzt, um eine nichtlineare Charakteristik zu ermöglichen und ermöglicht erstmals in vorteilhafter Weise den eingangs geschilderten Zielkonflikt im Stand der Technik zu lösen. Zusätzlich zu der erhöhten Viskosität weist die erfindungemäße Lösung eine besonders ausgeprägte Elastizität auf.

Das scherverdickende Fluid ist in der Nachstellvorrichtung wirkungsmäßig zwischen der Schneckenwelle und dem Getriebegehäuse angeordnet. Dadurch werden im Betrieb zwischen dem Schneckenrad und der Schneckenwelle auftretende Kräfte, beispielsweise quer zur Achse der Schneckenwelle wirkende Rückstellkräfte durch Lastwechsel, zwischen der Schneckenwelle und dem Getriebegehäuse als Scherbeanspruchung auf das Fluid ausgeübt. Dabei verfestigt sich das Fluid und baut einen mechanischen Widerstand auf, der eine Relativbewegung der Schneckenwelle gegen das Getriebegehäuse, in Wirkungsrichtung der Nachstellvorrichtung erschwert oder verhindert. Darin besteht ein grundlegender Unterschied zum Stand der Technik, bei dem eine Relativbewegung der Schneckenwelle gegen das Getriebegehäuse ausdrücklich zugelassen werden muss, um eine newtonsche, d.h. geschwindigkeitsabhängige Dämpfung überhaupt zu ermöglichen.

Ein wesentlicher Vorteil der Erfindung ist, dass durch das Fluid die Schneckenwelle relativ zum Getriebegehäuse definiert abgestützt werden kann, und dadurch optimiert spielarm bzw. spielfrei im Verzahnungseingriff mit dem Schneckenrad gehalten werden kann. Insbesondere muss kein Spiel vorgesehen sein, weil die Stütz-und Dämpfungswirkung des Fluids im Wesentlichen nicht wegabhängig ist. Dadurch können die im Stand der Technik durch das dabei notwendige Spiel verursachten Probleme durch Vibrationen sowie Anschlag- und Laufgeräusche wirkungsvoll gelöst werden.

Die besonderen physikalischen Eigenschaften des scherverdickenden Fluids können bei der Erfindung gleichermaßen zur Eliminierung von potentiell schädlichem Spiel und zur Unterdrückung von unerwünschten Relativbewegungen zwischen der Schneckenwelle und dem Schneckenrad genutzt werden. Durch die von den dynamischen Randbedingungen abhängige Viskosität kann durch das scherverfestigende Fluid eine nichtlineare Nachstellkraft erzeugt werden, die eine dynamische Nachstell- bzw. Stütz- und/oder Dämpfungscharakteristik ermöglicht, welche durch ein newtonsches Fluid wie im Stand der Technik prinzipiell nicht darstellbar wäre. Daraus resultiert die vorteilhafte Möglichkeit, einfach aufgebaute, robuste und kostengünstige technische Lösungen zu realisieren, ohne die im Stand der Technik prinzipbedingten Kompromisse eingehen zu müssen.

Als scherverdickendes Fluid kann beispielsweise eine Suspension oder ein Silikon-Polymer eingesetzt werden.

Eine vorteilhafte Ausführung der Erfindung ist, dass die Nachstellvorrichtung einen hydraulischen Nachstellaktuator aufweist. In dem Nachstellaktuator ist das erfindungsgemäße scherverdickende Fluid aufgenommen, so dass es wirkungsmäßig zwischen der Schneckenwelle und dem Getriebegehäuse angeordnet werden kann. Hierzu kann der Nachstellaktuator bevorzugt derart ausgestaltet und eingerichtet sein, dass er die Schneckenwelle bzw. einen Lagerträger, in dem die Schneckenwelle drehbar gelagert ist, auf der dem Schneckenrad abgewandten Seite gegen das Getriebegehäuse abstützt. Dabei ist der Nachstellaktuator eingerichtet und ausgestaltet, dass von der Schneckenwelle über das zwischengeschaltete Fluid eine hydraulische Kraftübertragung relativ zum Getriebegehäuse erfolgen und dadurch eine Scherbelastung des Fluids erzeugt werden kann. Im Betrieb werden von der Schneckenwelle beispielsweise durch Lastwechsel entstehende Kräfte (Rückstellkräfte durch Lastwechsel) quer zur Schneckenachse in den Nachstellaktuator eingeleitet und auf das Getriebegehäuse übertragen, wobei eine Scherverfestigung des Fluids erfolgt. Dadurch wird der Nachstellaktuator in Richtung der Krafteinleitung verfestigt, wodurch die Schneckenwelle starr gegen das Getriebegehäuse abgestützt wird. Die Nachstellkraft kann dadurch einen nichtlinearen Verlauf haben.

Ein Vorteil der Erfindung, der eine einfache und wirksame Konstruktion ermöglicht, resultiert daraus, dass durch den Nachstellaktuator ein spielarmer oder -freier Verzahnungseingriff erzeugt und gehalten werden kann, und durch dynamischen Eigenschaften des Fluids gleichzeitig Vibrationen und Geräusche im Betrieb wirksam reduziert werden können. Über das in dem Nachstellaktuator im Kraftfluss zwischen Getriebegehäuse und Schneckenwelle angeordnete Fluid kann ein Nachstellaktuator gleichzeitig zur Positionierung und Vorspannung dienen, und dabei für eine erhöhte Laufruhe sorgen.

Die Druckerzeugungsvorrichtung kann als Krafterzeugungsvorrichtung ein elastisches Krafterzeugungselement aufweisen, beispielsweise ein vorgespanntes Federelement, welches über eine Kolben-Zylinder-Einheit, einen Balg, eine Membran oder dergleichen an das Fluid angekoppelt ist. Dabei kann die als Betätigungskraft der Druckerzeugungsvorrichtung wirkende Federkraft definiert vorgegeben werden und ein entsprechend definierter Fluiddruck eingestellt werden. Die Druckerzeugungsvorrichtung kann auch durch eine die Aktuatorkammer oder die Druckkammer begrenzende elastische Membran realisiert werden, welche den Fluiddruck aufrecht erhält. Es ist alternativ oder zusätzlich denkbar und möglich, dass die Krafterzeugungsvorrichtung auf einem elektromechanischen oder einem anderen Wirkprinzip basiert. Vorteilhaft ist, dass die hydraulische Druckerzeugungsvorrichtung optimal an die jeweiligen Anforderungen angepasst werden kann.

Es ist weiterhin möglich, dass die Vorspanneinrichtung eine Kraftübersetzungseinrichtung aufweist. Die Kraftübersetzungseinrichtung kann die mittels einer Krafterzeugungseinrichtung, beispielsweise ein extern abgestütztes Federelement, erzeugte Betätigungskraft der Druckerzeugungsvorrichtung in eine höhere Vorspannkraft übersetzt werden, die auf den verzahnungseingriff wirkt. Vorteilhaft ist dabei, dass eine das Fluid aufweisende, nach dem Prinzip der hydraulischen Übersetzung funktionierende Kraftübersetzungseinrichtung mit geringem Aufwand und betriebssicher realisierbar ist. Beispielsweise können die Druckerzeugungsvorrichtung und die Aktuatorkammer Kolben-Zylinder-Einheiten mit unterschiedlichem Querschnitt aufweisen. Dadurch, dass der Kolbenquerschnitt der Druckerzeugungsvorrichtung geringer ist, kann beispielsweise eine relativ kleine Betätigungskraft durch ein Federelement oder dergleichen, in eine relativ dazu größere Vorspannkraft übersetzt werden.

Eine vorteilhafte Ausführung ist, dass die Nachstellvorrichtung eine hydraulische Dämpfungsvorrichtung aufweist. Die hydraulische Dämpfungsvorrichtung ist von dem scherverdickenden Fluid durchströmbar, und kann mit Vorteil eine mit der Aktuatorkammer verbundene hydraulische Drosseleinrichtung aufweisen. Dabei kann das erfindungsgemäße Fluid effektiv und konstruktiv einfach zur Realisierung einer hydrodynamischen Dämpfung genutzt werden, welche eine nichtlineare Dämpfungscharakteristik aufweist. Die Dämpfungswirkung kann definiert vorgegeben werden durch den hydraulischen Strömungswiderstand der Drosseleinrichtung, die abhängig ist von dem Strömungsquerschnitt und der Länge einer Strömungs- oder Drosselstrecke, und von der Viskosität des Fluids. Dabei ist ein Vorteil der Erfindung, dass sich die Viskosität des Fluids bei einer Scherbeanspruchung erhöht, und entsprechend der Strömungswiderstand und damit die Dämpfungswirkung ansteigt. Dadurch erzeugen impulsartige Kraftspitzen, die bei Lastwechseln auf die Schneckenwelle wirken, eine hohe entgegengesetzte Dämpfungskraft. Dagegen können langsamere Relativbewegungen zwischen Schneckenwelle und Schneckenrad, die bei der Aufrechterhaltung einer gleichmäßigen Vorspannkraft auftreten können, mit geringerer Dämpfung kompensiert werden.

Es ist möglich, dass die Drosseleinrichtung zwischen der Aktuatorkammer und einer Drucckammer angeordnet ist. Die Drosseleinrichtung kann als Drosselkanal ausgebildet sein, welcher eine von dem Fluid durchströmbare hydraulische Verbindung mit vorgegebener Länge und Querschnitt bildet, wodurch die den Strömungswiderstand bestimmenden Parameter Strömungslänge und Strömungsquerschnitt definiert sind. Eine derartige Drosseleinrichtung kann mit geringem Aufwand zur Erzeugung einer definierten Dämpfungscharakteristik angepasst werden.

Es kann vorgesehen sein, dass die Schneckenwelle in einem relativ zum Schneckenrad bewegbaren Lagerträger gelagert ist, an dem die Nachstellvorrichtung angreift. Der Lagerträger kann relativ zum Getriebegehäuse bewegbar gelagert sein, beispielsweise in Form eines an sich bekannten Schwenkhebels, der um eine zur Schneckenwelle im Wesentlichen parallele Schwenkachse verschwenkbar gelagert ist. Die Nachstellvorrichtung kann dann wirkungsmäßig zwischen dem Getriebegehäuse und dem Lagerträger angeordnet sein, wobei ein bevorzugt eine Aktuatorkammer aufweisender Nachstellaktuator den Lagerträger in Richtung des Verzahnungseingriffs relativ zum Getriebegehäuse hält und abstützt.

Gemäß einer vorteilhaften Ausführung kann die Nachstellvorrichtung zumindest teilweise mit dem Lagerträger und/oder dem Getriebegehäuse integriert ausgebildet sein. Beispielsweise können die Aktuatorkammer, und gegebenenfalls die Druckkammer und eine Drosseleinrichtung in einem Lagerträger integriert sein. Alternativ ist es möglich, die Nachstellvorrichtung an dem Getriebegehäuse anzubringen.

Eine vorteilhafte Ausführung kann vorsehen, dass die Aktuatorkammer ausgebildet ist in einer Ausnehmung, die von einer flexiblen Außenwandung verschlossen ist, die gegen das Getriebegehäuse oder den Lagerträger abstützbar ist. Die Ausnehmung kann beispielsweise in dem Getriebegehäuse oder von außen in einen Lagerträger konkav eingeformt sein, und nach außen durch einen beweglichen Kolben oder eine flexible und/oder elastische Membran verschlossen sein, beispielsweise aus einem Elastomer-, Gummi- oder Metallwerkstoff. Der Kolben oder die Membran kann nach außen, entgegen der Richtung des Verzahnungseingriffs, gegen das Getriebegehäuse abgestützt sein. Eine derartige Konstruktion kann konstruktiv einfach und kompakt ausgeführt werden.

Die Erfindung betrifft weiterhin eine Hilfskraftlenkung für ein Kraftfahrzeug, umfassend eine Lenksäule mit einem Hilfskraftantrieb, der einzelne oder mehrere der in den Ansprüchen genannten Merkmale oder Merkmalskombinationen aufweist. Vorteilhaft ist dabei die erhöhte Laufruhe, sowie der sichere Betrieb. Die Konstruktion und die praktische Realisierung können flexibel gestaltet und an unterschiedliche Betriebsbedingungen angepasst werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung in einer schematischen perspektivischen Ansicht,
- Figur 2: eine Lenksäule einer Kraftfahrzeuglenkung gemäß Figur 1 in einer Seitenansicht,
- Figur 3: die Lenksäule gemäß Figur 2 mit einem schematisch im Längsschnitt dargestellten Hilfskraftantrieb in einer ersten Ausführungsform,
- Figur 4: eine Teilansicht eines Querschnitts durch einen Hilfskraftantrieb in einer zweiten Ausführungsform,
- Figur 5: einen Lagerträger eines Hilfskraftantriebs gemäß Figur 4 in einer schematischen perspektivischen Ansicht,
- Figur 6: eine schematische Schnittansicht des Lagerträgers gemäß Figur 5.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

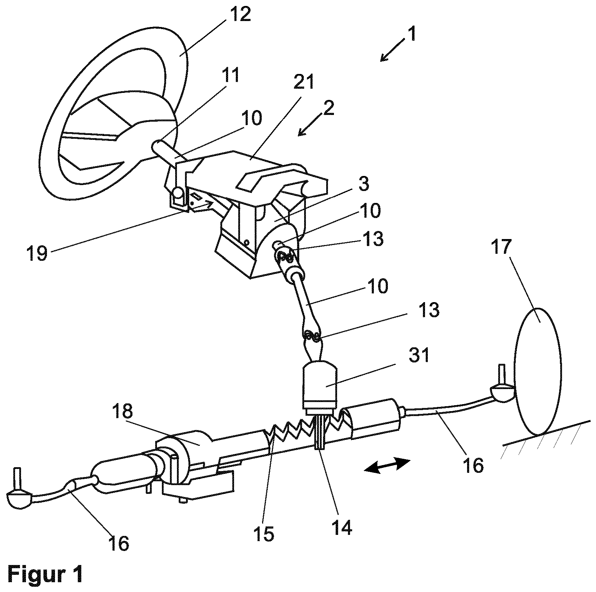

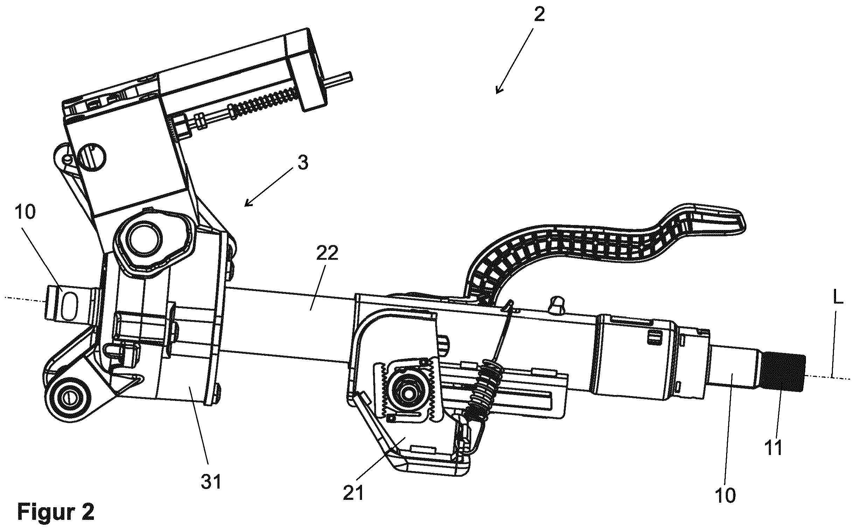

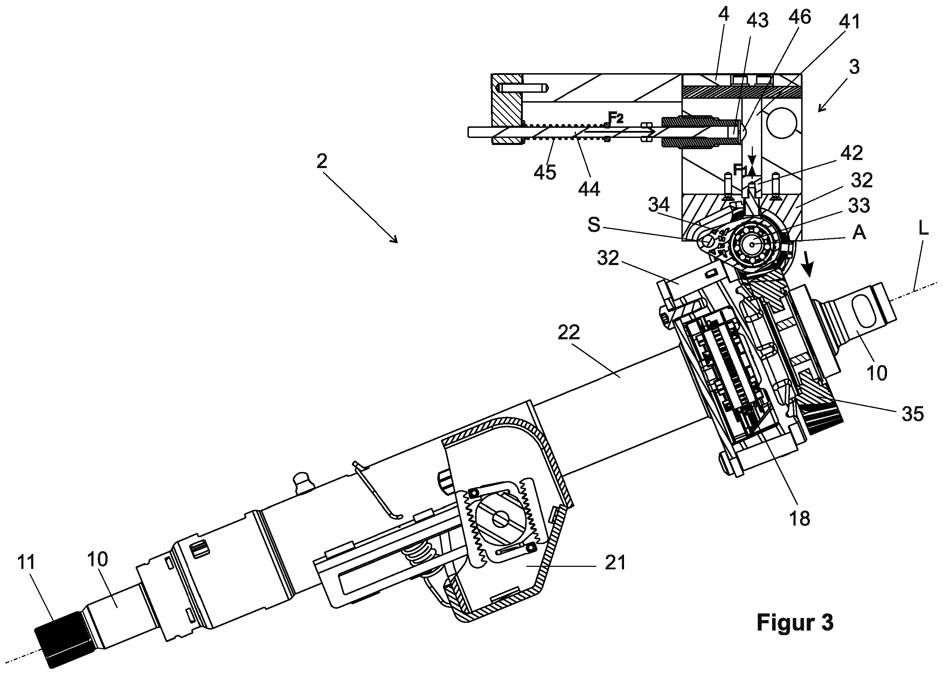

In Figur 1 ist eine als elektromechanische Hilfskraftlenkung 1 ausgebildete Kraftfahrzeuglenkung schematisch dargestellt. Diese weist eine Lenksäule 2 auf, die in Figuren 2 und 3 separat gezeigt ist. Die Lenksäule 2 weist eine Trageinheit 21 auf, die an einer nicht dargestellten Karosserie eines Kraftfahrzeugs anbringbar ist.

In der Lenksäule 2 ist eine Lenkwelle 10 um ihre Längsachse L drehbar gelagert. Diese weist an ihrem bezüglich der Fahrtrichtung hinteren Ende einen Befestigungsabschnitt 11 auf, an dem ein Lenkrad 12 drehfest angebracht ist, über welches ein Fahrer ein Lenkmoment (Handmoment) als Lenkbefehl in die Lenkwelle 10 einbringen kann.

Das Lenkmoment wird über die Lenkwelle 10, die zur Anpassung an die Einbaulage im Kraftfahrzeug zwischengeschaltete Kardangelenke 13 aufweist, auf ein Lenkritzel 14 übertragen, welches in eine längsverschieblich gelagerte Zahnstange 15 eingreift. Diese setzt eine Drehung der Lenkwelle 10 bei einem Lenkeingriff in eine Verschiebung von Spurstangen 16 um, wie mit dem Doppelpfeil angedeutet, welche den vorgegebenen Lenkeingriff als Lenkeinschlag auf die lenkbaren Räder 17 des Kraftfahrzeugs übertragen.

Eine elektrische Hilfskraftunterstützung kann einen an der Lenksäule 2 angebrachten, mit der Lenkwelle 10 gekoppelten Hilfskraftantrieb 3, oder einen am Ritzel 14 mit der Lenkwelle 10 gekoppelten Hilfskraftantrieb 31 aufweisen, wobei die Hilfskraftantriebe 3 und 31 gleichartig aufgebaut sein können und/oder einer mit der Zahnstange 106 gekoppelten Hilfskraftunterstützung 116 vorgesehen sein. Durch den Hilfskraftantrieb 3 oder 31 kann ein Hilfsdrehmoment in die Lenkwelle 1 und/oder das Lenkritzel 104 eingekoppelt werden, um den Fahrer bei der Lenkarbeit zu unterstützten.

Es kann auch ein Hilfskraftantrieb 18 vorgesehen sein, um eine die Lenkung unterstützende Hilfskraft in die Zahnstange 15 einzubringen.

Üblicherweise ist nur an einer der gezeigten drei Positionen ein Hilfskraftantrieb 3, 31 oder 18 angebracht. Das Hilfsdrehmoment bzw. die Hilfskraft, welche zur Unterstützung des Fahrers mittels der jeweiligen Hilfskraftantrieb 3, 31 oder 18 aufgebracht werden soll, wird unter Berücksichtigung eines von einem Drehmomentsensor 19 ermittelten, vom Fahrer manuell eingebrachten Lenkmoments bestimmt. Alternativ oder in Kombination mit der Einbringung des Hilfsdrehmoments kann durch die Hilfskraftantriebe 3, 31, 18 ein zusätzlicher Lenkwinkel in das Lenksystem eingebracht werden, der zu dem vom Fahrer über das Lenkrad 12 aufgebrachten Lenkwinkel summiert wird.

Zur Erläuterung der Erfindung wird im Folgenden Bezug genommen auf den Hilfskraftantrieb 3, wobei jedoch bei gleichwirkender Funktion ein Einsatz in einem der Hilfskraftantriebe 3 oder 18 ebenfalls möglich ist.

Mittels des Drehmomentsensors 19 wird das manuell in die Lenkwelle 10 eingebrachte Handmoment erfasst, beispielsweise in an sich bekannter Weise durch Messung der Torsion eines in die Lenkwelle 10 eingegliederten Drehstabs. Über eine nicht dargestellte elektrische Steuereinheit wird ein Hilfsmoment bestimmt und ein daraus abgeleitetes elektrisches Steuersignal in einen Elektromotor des Hilfsantriebs 3 eingespeist. Das auf diese Weise erzeugte elektromotorische Moment wird zur Unterstützung der manuellen Lenkarbeit mittels des elektrischen Hilfsantriebs 3 in die Lenkwelle eingekoppelt.

Der Drehmomentsensor 19 kann, wie gezeigt, in der Lenksäule 2 angebracht sein, alternativ ist aber auch eine Anbringung an anderer Stelle der Lenkwelle 10 oder der Zahnstange 15 möglich.

Bei der in den Figuren 2 und 3 gezeigten Lenksäule 2 ist die Lenkwelle 10 um die Längsachse L drehbar in einem Mantelrohr 22 gelagert. An diesem ist ein Getriebegehäuse 32, auch kurz als Gehäuse 32 bezeichnet, des Hilfskraftantriebs 3 angebracht. Das Getriebegehäuse 32 ist in Figur 3 aufgeschnitten bzw. teilweise weggelassen.

In dem Getriebegehäuse 32 ist eine Schneckenwelle 33 um eine quer zur Längsachse L liegende Achse A von einem nicht dargestellten Elektromotor drehend antreibbar in einem Lagerträger 34 gelagert. Schneckenwelle 33 steht in Verzahnungseingriff mit der außen umlaufenden Verzahnung eines Schneckenrads 35, welches koaxial drehfest auf der Lenkwelle 10 angebracht ist. Der Lagerträger 34 ist als Schwenkhebel ausgebildet, der um eine im Wesentlichen parallel zur Achse A angeordnete Schwenkachse S in dem Getriebegehäuse 32 schwenkbar gelagert ist, so dass die Schneckenwelle 33 radial auf die Längsachse L zu in Richtung des Verzahnungseingriffs mit dem Schneckenrad 35 bewegbar geführt ist, wie in Figur 3 mit dem Pfeil angedeutet ist.

An dem Getriebegehäuse 32 ist eine erfindungsgemäße Nachstellvorrichtung 4 angebracht. Diese weist eine zylinderförmige, radial gegen die Längsachse L gerichtete Aktuatorkammer 41 auf, die mit einem scherverdickendem Fluid gefüllt ist. In der Aktuatorkammer 41 ist ein Kolben 42 verschieblich angeordnet, der den Lagerträger 34 auf der dem Verzahnungseingriff abgewandten Außenseite kontaktiert. Der Kolben 42 ist nach Art einer Kolben-Zylinder-Einheit in der Aktuatorkammer 41 verschieblich gelagert, und zwar in der mit dem Pfeil angedeuteten Richtung auf den Verzahnungseingriff mit dem Schneckenrad 35 zu. Mit anderen Worten kann durch den Kolben 42 die in dem Lagerträger 34 gelagerte Schneckenwelle 33 in Verzahnungseingriff mit dem Schneckenrad 35 gehalten, oder durch eine Verschiebung des Kolbens 42 in der Aktuatorkammer 41 in Richtung des Verzahnungseingriffs gegen das Schneckenrad 35 belastet werden.

An die Aktuatorkammer 41 ist eine Druckkammer 43 hydraulisch angeschlossen, die ebenfalls mit dem Fluid gefüllt ist. In die ebenfalls zylindrisch geformte Druckkammer 43 taucht von außen ein Druckkolben 44 ein. Dieser ist durch ein vorgespanntes Federelement 45, welches sich nach außen gegen die Nachstelleinrichtung 4 bzw. das damit verbundene Getriebegehäuse 32 abstützt, in Richtung der Druckkammer 43 mit einer Betätigungskraft beaufschlagt. Das Federelement 45 bildet somit das Krafterzeugungselement einer Krafterzeugungseinrichtung. Die auf den Druckkolben 44 als Betätigungskraft ausgeübte Federkraft erzeugt in dem Fluid einen Fluiddruck p, welcher der Federkraft pro Kolbenfläche des Drucckolbens 44 entspricht. Dieser Fluiddruck p herrscht ebenfalls in der Aktuatorkammer 41, so dass der Kolben 42 mit einer Vorspannkraft, die dem Produkt von Fluiddruck p und Kolbenfläche des Kolbens 42 entspricht. Nach dem Prinzip der hydraulischen Übersetzung verhält sich die von dem Kolben 42 auf den Lagerträger 34 ausgeübte Vorspannkraft zu der auf den Druckkolben 44 ausgeübten Federkraft wie das Verhältnis der Kolbenflächen des Kolbens 42 und des Druckkolbens 44.

Zwischen der Aktuatorkammer 41 und der Druckkammer 43 kann eine hydraulische Drossel 46 angeordnet sein, beispielsweise ein Durchgangskanal oder eine Durchgangsöffnung mit einem definierten, verringerten Strömungsquerschnitt.

Durch das Federelement 45, den Druckkolben 44 wird eine hydraulische Druckerzeugungsvorrichtung realisiert, welche zusammen mit dem in der Aktuatorkammer 41 angeordneten Kolben 42 eine hydraulische Vorspanneinrichtung bildet. Dadurch kann die in dem Lagerträger 34 gelagerte Schneckenwelle 33 in Richtung des Verzahnungseingriffs gegen das Schneckenrad 35 angedrückt werden.

Wird die Schneckenwelle 33 im Betrieb durch Lastwechsel relativ zum Schneckenrad 35 nach außen belastet, wird der Kolben 42 in die Aktuatorkammer 41 gepresst, und es wirkt eine Scherbelastung auf das Fluid. Aufgrund seiner erfindungsgemäß scherverfestigenden Eigenschaft verfestigt sich das Fluid dabei, wodurch der Strömungswiderstand beim Eintritt in die Druckkammer 44 ansteigt, insbesondere wenn eine Drossel 46 zwischengeschaltet ist, und verhindert eine weitere radiale Ausweichbewegung der Schneckenwelle 33.

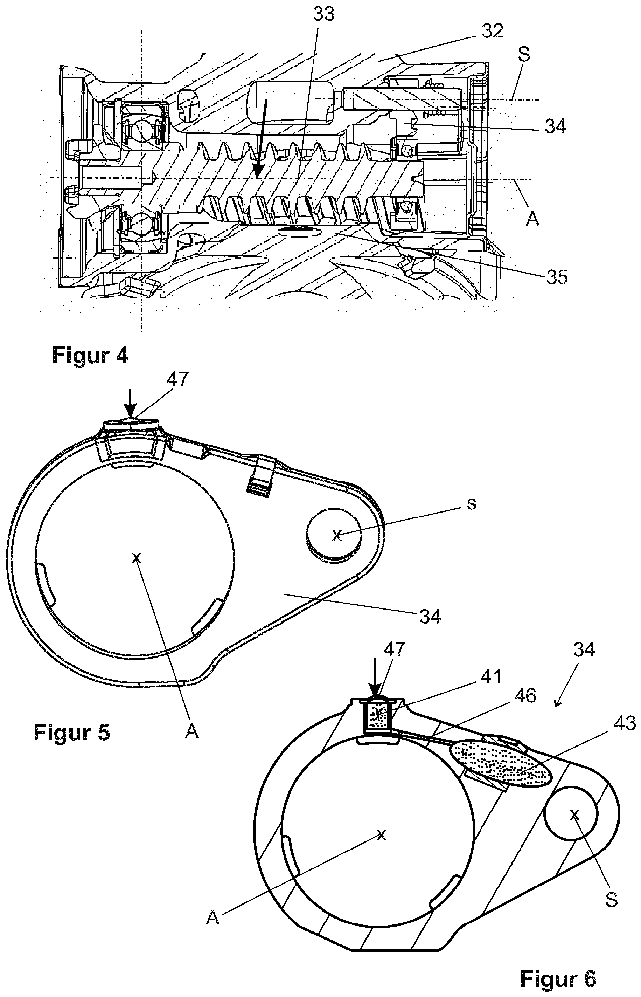

Figur 4 zeigt eine weitere Ausführung, bei der die Nachstellvorrichtung 4 in den als Schwenkhebel ausgebildeten Lagerträger 34 integriert ist. Hierzu weist der in Figur 5 in einer Außenansicht und in Figur 6 im Schnitt gezeigte Lagerträger 34 eine als Ausnehmung ausgebildete Aktuatorkammer 41 auf, die mit scherverdickendem Fluid gefüllt ist. Nach außen ist die Aktuatorkammer 41 mit einer flexiblen, elastischen Membran 47 verschlossen. Über einen als Drossel 46 wirkenden Verbindungskanal ist diese Aktuatorkammer 41 mit einer in dem Lagerträger 34 integrierten Druckkammer 43 hydraulisch verbunden. Die Druckkammer 43 kann eine elastische Blase aufweisen und/oder die Membran 47 einen Druck auf das Fluid ausüben, so dass ein Fluiddruck p aufgebaut und gehalten wird. Durch die Membran 47, die sich an dem Getriebegehäuse 32 abstützt, kann eine in Richtung auf den Verzahnungseingriff wirkende Vorspannkraft auf den Lagerträger 34 ausgeübt werden.

### Bezugszeichenliste

- 1: Hilfskraftlenkung
- 10: Lenkwelle
- 11: Befestigungsabschnitt
- 12: Lenkrad
- 13: Kardangelenk
- 14: Lenkritzel
- 15: Zahnstange
- 16: Spurstange
- 17: Rad
- 18: Hilfskraftantrieb
- 19: Drehmomentsensor
- 2: Lenksäule
- 21: Trageinheit
- 3, 31: Hilfskraftantrieb
- 32: Getriebegehäuse
- 33: Schneckenwelle
- 34: Lagerträger
- 35: Schneckenrad
- 4: Nachstellvorrichtung
- 41: Aktuatorkammer
- 42: Kolben
- 43: Druckkammer
- 44: Druckkolben
- 45: Federelement
- 46: Drossel
- 47: Membran

- L: Längsachse
- A: Achse (Schneckenachse)
- S: Schwenkachse

## Patentansprüche

1. Hilfskraftantrieb (3,18,31) für eine Lenksäule (2) eines Kraftfahrzeugs, umfassend eine in einem Getriebegehäuse (32) gelagerte, motorisch drehend antreibbare Schneckenwelle (33), die mit einem mit einer Lenkwelle (10) koppelbaren Schneckenrad (35) in Verzahnungseingriff steht, und mit einer an dem Getriebegehäuse (32) abgestützten Nachstellvorrichtung (4), welche die Schneckenwelle (33) in Richtung des Verzahnungseingriffs gegen das Schneckenrad (35) belastet,
wobei die Nachstellvorrichtung (4) ein scherverdickendes Fluid und eine Vorspanneinrichtung aufweist, durch die das Fluid mit einem vorgegebenen Vorspanndruck beaufschlagbar ist, wobei das Fluid in einer form- und/oder volumenveränderbaren Aktuatorkammer (41) aufgenommen ist,
**dadurch gekennzeichnet,**
**dass** die Vorspanneinrichtung eine mit der Aktuatorkammer (41) verbundene Drucckammer (43) aufweist, mit der eine Druckerzeugungsvorrichtung (44, 45) zusammenwirkt.

2. Hilfskraftantrieb (3,18,31) nach Anspruch 1, **dadurch gekennzeichnet, dass** die Nachstellvorrichtung einen hydraulischen Nachstellaktuator aufweist.

3. Hilfskraftantrieb (3,18,31) nach einem der vorangehenden Ansprüche, **dadurch gekennzeichnet, dass** die Vorspanneinrichtung eine Kraftübersetzungseinrichtung aufweist.

4. Hilfskraftantrieb (3,18,31) nach einem der vorangehenden Ansprüche, **dadurch gekennzeichnet, dass** die Nachstellvorrichtung (4) eine hydraulische Dämpfungsvorrichtung aufweist.

5. Hilfskraftantrieb (3,18,31) nach Anspruch 4, **dadurch gekennzeichnet, dass** die Dämpfungsvorrichtung eine mit der Aktuatorkammer (41) verbundene hydraulische Drosseleinrichtung (46) aufweist.

6. Hilfskraftantrieb (3,18,31) nach Anspruch 5, **dadurch gekennzeichnet, dass** die Drosseleinrichtung (46) zwischen der Aktuatorkammer (41) und einer Druckkammer (43) angeordnet ist.

7. Hilfskraftantrieb (3,18,31) nach einem der vorangehenden Ansprüche, **dadurch gekennzeichnet, dass** die Schneckenwelle (33) in einem relativ zum Schneckenrad (35) bewegbaren Lagerträger (34) gelagert ist, an dem die Nachstellvorrichtung (4) angreift.

8. Hilfskraftantrieb (3,18,31) nach Anspruch 7, **dadurch gekennzeichnet, dass** die Nachstellvorrichtung (4) zumindest teilweise mit dem Lagerträger (34) und/oder dem Getriebegehäuse (32) integriert ausgebildet ist.

9. Hilfskraftantrieb (3,18,31) nach Anspruch 8, **dadurch gekennzeichnet, dass** die Aktuatorkammer (41) ausgebildet ist in einer Ausnehmung, die von einer flexiblen Außenwandung (47) verschlossen ist, die gegen das Getriebegehäuse (32) oder den Lagerträger (34) abstützbar ist.

10. Hilfskraftlenkung (1) für ein Kraftfahrzeug, umfassend eine Lenksäule (2) mit einem Hilfskraftantrieb (18), **dadurch gekennzeichnet, dass** der Hilfskraftantrieb (18) nach einem oder mehreren der vorangehenden Ansprüche ausgestaltet ist.

## Claims

1. Auxiliary power drive (3, 18, 31) for a steering column (2) of a motor vehicle, comprising a worm shaft (33) which is mounted in a gear housing (32), can be driven in rotation by a motor and is in meshing engagement with a worm wheel (35) which can be coupled to a steering shaft (10), and having an adjusting device (4) which is supported on the gear housing (32) and loads the worm shaft (33) in the direction of the meshing engagement against the worm wheel (35),
the adjusting device (4) having a shear-thickening fluid and a pretensioning device by means of which the fluid can be subjected to a predetermined pretensioning pressure, the fluid being accommodated in an actuator chamber (41) which can be varied in shape and/or volume,
**characterized in**
**in that** the pretensioning device has a pressure chamber (43) which is connected to the actuator chamber (41) and with which a pressure-generating device (44, 45) interacts.

2. Auxiliary power drive (3, 18, 31) according to claim 1, **characterized in that** the adjusting device has a hydraulic adjusting actuator.

3. Auxiliary power drive (3, 18, 31) according to one of the preceding claims, **characterized in that** the pretensioning device has a force transmission device.

4. Auxiliary power drive (3, 18, 31) according to one of the preceding claims, **characterized in that** the adjusting device (4) has a hydraulic damping device.

5. Auxiliary power drive (3, 18, 31) according to claim 4, **characterized in that** the damping device has a hydraulic throttle device (46) connected to the actuator chamber (41).

6. Auxiliary power drive (3, 18, 31) according to claim 5, **characterized in that** the throttle device (46) is arranged between the actuator chamber (41) and a pressure chamber (43).

7. Auxiliary power drive (3, 18, 31) according to one of the preceding claims, **characterized in that** the worm shaft (33) is mounted in a bearing support (34) which is movable relative to the worm wheel (35) and on which the adjusting device (4) engages.

8. Auxiliary power drive (3, 18, 31) according to claim 7, **characterized in that** the adjusting device (4) is designed to be at least partially integrated with the bearing carrier (34) and/or the gear housing (32).

9. Auxiliary power drive (3, 18, 31) according to claim 8, **characterized in that** the actuator chamber (41) is formed in a recess which is closed by a flexible outer wall (47) which can be supported against the transmission housing (32) or the bearing carrier (34).

10. Power-assisted steering system (1) for a motor vehicle, comprising a steering column (2) with a auxiliary power drive (18), **characterized in that** the auxiliary power drive (18) is designed according to one or more of the preceding claims.

## Revendications

1. Entraînement auxiliaire (3, 18, 31) pour une colonne de direction (2) d'un véhicule automobile, comprenant un arbre à vis sans fin (33) monté dans un carter de transmission (32) et pouvant être entraîné en rotation par un moteur, qui est en prise avec une roue à vis sans fin (35) pouvant être couplée à un arbre de direction (10), et comprenant un dispositif de rattrapage de jeu (4) qui s'appuie sur le carter de transmission (32) et qui charge l'arbre à vis sans fin (33) contre la roue à vis sans fin (35) dans le sens de la prise avec la denture,
le dispositif de rattrapage (4) présentant un fluide épaississant le cisaillement et un dispositif de précontrainte par lequel le fluide peut être soumis à une pression de précontrainte prédéfinie, le fluide étant logé dans une chambre d'actionneur (41) de forme et/ou de volume modifiables,
**caractérisé en ce que**
**en ce que** le dispositif de précontrainte présente une chambre de pression (43) reliée à la chambre d'actionneur (41), avec laquelle coopère un dispositif de génération de pression (44, 45).

2. Entraînement auxiliaire (3, 18, 31) selon la revendication 1, **caractérisé en ce que** le dispositif de rattrapage de jeu comporte un actionneur hydraulique de rattrapage de jeu.

3. Entraînement auxiliaire (3, 18, 31) selon l'une des revendications précédentes, **caractérisé en ce que** le dispositif de précontrainte comporte un dispositif de démultiplication de force.

4. Entraînement auxiliaire (3, 18, 31) selon l'une des revendications précédentes, **caractérisé en ce que** le dispositif de rattrapage de jeu (4) présente un dispositif d'amortissement hydraulique.

5. Entraînement auxiliaire (3, 18, 31) selon la revendication 4, **caractérisé en ce que** le dispositif d'amortissement comporte un dispositif d'étranglement hydraulique (46) relié à la chambre d'actionneur (41).

6. Entraînement auxiliaire (3, 18, 31) selon la revendication 5, **caractérisé en ce que** le dispositif d'étranglement (46) est disposé entre la chambre d'actionneur (41) et une chambre de pression (43).

7. Entraînement auxiliaire (3, 18, 31) selon l'une des revendications précédentes, **caractérisé en ce que** l'arbre à vis sans fin (33) est monté dans un support de palier (34) mobile par rapport à la roue à vis sans fin (35) et sur lequel agit le dispositif de rattrapage de jeu (4).

8. Entraînement auxiliaire (3, 18, 31) selon la revendication 7, **caractérisé en ce que** le dispositif de rattrapage de jeu (4) est réalisé au moins partiellement intégré avec le support de palier (34) et/ou le carter de transmission (32).

9. Entraînement auxiliaire (3, 18, 31) selon la revendication 8, **caractérisé en ce que** la chambre d'actionneur (41) est formée dans un évidement qui est fermé par une paroi extérieure flexible (47) qui peut s'appuyer contre le carter de transmission (32) ou le support de palier (34).

10. Direction assistée (1) pour un véhicule automobile, comprenant une colonne de direction (2) avec une entraînement auxiliaire (18), **caractérisée en ce que** la entraînement auxiliaire (18) est conçue selon une ou plusieurs des revendications précédentes.
